# EUROPÄISCHE PATENTSCHRIFT

(11) **EP 4 144 915 B1**
(45) Veröffentlichungstag und Bekanntmachung des Hinweises auf die Patenterteilung: **14.08.2024**
(21) Anmeldenummer: 22193963.0
(22) Anmeldetag: 11.04.2018
(51) Int. Cl.: E01B 27/17, E01B 35/06, B61L 23/04, E01B 27/16, G01C 15/00

(54) **VERFAHREN ZUM STEUERN EINER GLEISBAUMASCHINE**
METHOD FOR CONTROLLING A TRACK CONSTRUCTION MACHINE
PROCÉDÉ POUR LA COMMANDE D'UN ENGIN DE POSE DE VOIE

(30) Priorität: 12.05.2017 AT 1962017
(43) Veröffentlichungstag der Anmeldung: 08.03.2023
(62) Teilanmeldung aus: 18721287.3
(73) Patentinhaber: Track Machines Connected Gesellschaft m.b.H., 4020 Linz (AT)
(72) Erfinder: BÜRGER, Martin, 4030 Linz (AT)
(74) Vertreter: Burgstaller, Peter

(56) Entgegenhaltungen:
- EP-A1- 2 784 540
- EP-A1- 3 138 754
- AT-A1- 516 590
- DE-A1- 3 923 733

## Beschreibung

### Gebiet der Technik

Die Erfindung betrifft ein Verfahren zum Steuern einer Gleisbaumaschine, insbesondere einer Weichenstopf- bzw. Universalstopfmaschine, welche Gleisbaumaschine auf einem Gleis kontinuierlich oder zyklisch entlang fährt und gegenüber einem Maschinenrahmen verstellbare Arbeitsaggregate, insbesondere ein Stopfaggregat sowie ein Hebeaggregat umfasst, wobei in Arbeitsrichtung vor den Arbeitsaggregaten mittels einer Sensoreinrichtung umfassend einen Laser- oder Rotationsscanner und eine Farbkamera Daten von Gleisobjekten, insbesondere Schwellen, Schienen und gegebenenfalls Hindernissen umfassend eine dreidimensionale Punkwolke beziehungsweise eine fotographische Darstellung erfasst werden.

### Stand der Technik

Aus DE 39 23 733 A1 ist eine Gleisbaumaschine mit einem Sensor- und Steuerungssystem bekannt. Dabei werden zunächst an einer Gleisstelle mittels einer Sensoreinrichtung Schwellen, Schwellenfächer, Schienen und Hindernisse im Gleis erkannt und abgespeichert. In Abhängigkeit der erfassten Gleisobjekte werden für Arbeitsaggregate der Gleisbaumaschine Arbeitsstellungen ermittelt, um beispielsweise eine Kollision mit einem Hindernis zu vermeiden. Sobald während einer Arbeitsvorfahrt ein Arbeitsaggregat, z.B. ein Stopfaggregat, an die Gleisstelle gelangt, werden Arbeitsaggregatantriebe automatisiert angesteuert, um das Arbeitsaggregat in die ermittelte Arbeitsstellung zu bringen. Dieser Ablauf wiederholt sich zyklisch für weitere Gleisstellen, an welchen ein entsprechender Arbeitsvorgang durchzuführen ist.

Eine entsprechende Lösung für eine Weichenstopfmaschine ist in AT 516 590 A1 offenbart. Auf Basis von Messwerten einer Weichenkomponentenmessanlage erfolgt die Ermittlung von Arbeitsstellungen einer Hebe-Richteinrichtung, wobei laufend ein Schließweg einer Rollenzange und ein Verstellweg eines Hebehakens abgefragt werden, um sicherzustellen, dass vorgegebene Positionen angefahren wurden bzw. eine Schiene sicher gegriffen wurde. Die CH 644 168 A5 offenbart eine Gleisstopfmaschine mit einem Maschinenrahmen, gegenüber dem verstellbare Arbeitsaggregate angeordnet sind. Ein Sensor- und Steuerungssystem zur Ansteuerung der Arbeitsaggregate umfasst eine Anzeigevorrichtung sowie Bedienelemente.

### Zusammenfassung der Erfindung

Der Erfindung liegt die Aufgabe zugrunde, für ein Verfahren der eingangs genannten Art eine Verbesserung gegenüber dem Stand der Technik anzugeben.

Erfindungsgemäß werden diese Aufgaben gelöst durch die Merkmale des Anspruchs 1. Abhängige Ansprüche geben vorteilhafte Ausgestaltungen der Erfindung an.

Dabei kann vorgesehen sein, dass vor einer Ansteuerung der Arbeitsaggregate mittels einer Anzeigevorrichtung die ermittelten Arbeitsstellungen der Arbeitsaggregate angezeigt werden und dass vor einer Durchführung des Arbeitsvorgangs die Arbeitsstellungen der Arbeitsaggregate mittels Bedienelemente veränderbar sind. Auf diese Weise ist eine einfache Überprüfung der ermittelten Arbeitsstellungen möglich, ohne die Vorteile einer automatisierten Arbeitsaggregate-Ansteuerung zu schmälern.

Durch die einem Arbeitsvorgang vorausgehende Anzeige der ermittelten Arbeitsstellungen kann eine Bedienperson in die Lage versetzt werden, mögliche Fehlstellungen zu erkennen, bevor diese wirksam werden. Zu solchen Ausnahmefällen kann es beispielsweise kommen, wenn Hindernisse erst nach einem Passieren der Sensoreinrichtung an die für den Arbeitsvorgang vorgesehene Gleisstelle gelangen.

Eine Anpassung der Arbeitsstellungen erfolgt dann in einfacher Weise über Bedienelemente, sodass keine Beeinträchtigung des Arbeitsfortschritts gegeben ist. Dabei können insbesondere solche Bedienelemente zu Einsatz kommen, die auch bisher bei nicht automatisierten Arbeitsaggregaten zur manuellen Ansteuerung genutzt werden.

In einer vorteilhaften Ausführung der Erfindung wird in der Anzeigevorrichtung eine virtuelle Darstellung des Gleises angezeigt, wobei auch die ermittelten Arbeitsstellungen der Arbeitsaggregate in Bezug auf diese Darstellung angezeigt werden. Auf diese Weise hat eine Bedienperson einen unmittelbaren Eindruck, welche Situation mit den ermittelten Arbeitsstellungen an der zu bearbeitenden Gleisstelle zu erwarten ist.

Eine weitere Verbesserung ist gegeben, wenn in der Anzeigevorrichtung eine fotografische Darstellung des Gleises angezeigt wird. Das ermöglicht eine intuitive Erfassung der vorgegebenen Arbeitssituation an der zu bearbeitenden Gleisstelle, wodurch ein rasches Reagieren bei ansonsten geringer Belastung einer Bedienperson gefördert wird.

In einer Weiterbildung wird die Überprüfung der ermittelten Arbeitsstellungen auch dadurch erleichtert, dass in der Anzeigevorrichtung die Schwellen, die Schienen und gegebenenfalls erkannte Hindernisse als unterscheidbare Objekte klassifiziert und entsprechend markiert werden (z.B. mit unterschiedlichen Farben). Ein Klassifizierungsverfahren für Gleisobjekte ist in der am 15.12.2017 veröffentlichten österreichischen Patentanmeldung AT 518692 A1 offenbart, insbesondere in den Absätzen 35 und 55 bis 65. Demgemäß werden aus mittels eines Messsystems erfassten Messdaten Objekte eines Fahrwegs ermittelt. Ermittelte Objekte werden mittels einer Auswerteeinrichtung vorgegebenen Objekten zugeordnet und mit Positionsdaten verknüpft in einer Datenbank abgespeichert. Aus den Messdaten und Merkmalsdaten des Messsystems kann ein mehrdimensionales Modell des Fahrwegs errechnet werden.

Für eine effiziente Darstellung mittels Anzeigevorrichtung ist es sinnvoll, wenn ein mit der Gleisbaumaschine mitbewegter Anzeigehorizont vorgegeben wird, der in Arbeitsrichtung vor einer aktuellen Position der Arbeitsaggregate liegt und wenn die ermittelten Arbeitsstellungen der Arbeitsaggregate bis zum Erreichen des Anzeigehorizonts angezeigt werden. Die Anzeige der ermittelten Arbeitsstellungen erfolgt dann in einem zeitlichen Abstand zur tatsächlichen Ansteuerung der Arbeitsaggregate, sodass ausreichend Zeit bleibt, um Nachjustierungen vorzusehen.

Dabei ist es günstig, wenn bis zum Erreichen des Anzeigehorizonts eine Abfrage zur Bestätigung der ermittelten Arbeitsstellungen der Arbeitsaggregate angezeigt wird und wenn insbesondere bei Anzeigehorizonterreichung ohne Bestätigung der Abfrage die Gleisbaumaschine angehalten wird. Auf diese Weise erhält eine Bedienperson die Möglichkeit, angezeigte Arbeitsstellungen zu bestätigen, ohne in den nachfolgenden Ablauf eingreifen zu müssen. Als vorteilhafte Sicherheitsmaßnahme wird die Maschine gestoppt, wenn die Bedienperson keine Reaktion zeigt.

Vorteilhafterweise werden bei einer Zustimmung der ermittelten Arbeitsstellungen und bei Annäherung an die Gleisstelle die Arbeitsaggregate mittels automatisiert angesteuerter Antriebe in die Arbeitsstellungen gebracht, wobei anschließend der Arbeitsvorgang (z.B. Gleisanhebung mittels Hebeaggregat und Unterstopfung einer Schwelle mittels Stopfaggregat) durchgeführt wird.

Bei Ablehnung der ermittelten Arbeitsstellung eines Arbeitsaggregats ist es vorteilhaft, wenn beim Erreichen der Gleisstelle das Arbeitsaggregat angehalten wird und wenn das Arbeitsaggregat mittels über die Bedienelemente angesteuerter Antriebe in Arbeitsstellung gebracht wird. Ein derartiges manuelles Positionieren stellt einen Routinevorgang für eine Bedienperson einer Gleisbaumaschine dar, sodass eine rasche Durchführung sichergestellt ist. Gegebenenfalls erfolgt parallel dazu bei nicht betroffenen Arbeitsaggregaten - für die bereits eine Zustimmung vorliegt - eine automatisierte Positionierung.

In einer anderen Ausprägung der Erfindung ist statt einer Bestätigungsabfrage vorgesehen, dass bei Annäherung an die Gleisstelle die Arbeitsaggregate mittels automatisiert angesteuerter Antriebe in die ermittelten Arbeitsstellungen gebracht werden, dass die Arbeitsstellungen über die Bedienelemente nachjustierbar sind und dass der Arbeitsvorgang nach Betätigung eines Freigabebedienelements durchgeführt wird. Da im Regelfall keine Nachjustierungen erforderlich sind, beschränkt sich die Aufgabe einer Bedienperson auf das zyklische Freigeben der automatisch angesteuerten Arbeitsstellungen.

Beim Verfahren zum Steuern einer Gleisstopfmaschine ist es vorteilhaft, wenn die ermittelte Arbeitsstellung eines Hebehakens des Hebeaggregats gemeinsam mit einer Information über eine ermittelte Greifposition an einem Schienenfuß oder an einem Schienenkopf angezeigt wird. Mit einer derartigen Anzeigendarstellung kann die vorgegebene Hebeanordnung an der Gleisstelle rasch und eindeutig beurteilt werden.

Zudem ist es für ein Verfahren zum Steuern einer Weichenstopf- bzw. Universalstopfmaschine von Vorteil, wenn die ermittelte Arbeitsstellung eines ausfahrbaren Zusatzhebeaggregats mit einer Information über einen Ausfahr- bzw. Einfahrvorgang angezeigt wird. Auf diese Weise ist ein Einsatz des Zusatzhebeaggregats vor einer tatsächlichen Aktivierung überprüfbar. Insbesondere kann ein störungsfreies Ausfahren und Einfahren sichergestellt werden. Günstigerweise werden auch ein Anstellwinkel einer am freien Ende des Zusatzhebeaggregats befindlichen Schienengreifvorrichtung sowie ein ermittelter Einsatzbereich des Zusatzhebeaggregats angezeigt.

Eine Gleisbaumaschine zur Durchführung des Verfahrens umfasst einen Maschinenrahmen, gegenüber dem verstellbare Arbeitsaggregate angeordnet sind, und ein Sensor- und Steuerungssystem zur automatisierten Ansteuerung der Arbeitsaggregate, wobei das Sensor- und Steuerungssystem eine Anzeigevorrichtung sowie Bedienelemente umfasst und zur Durchführung eines der vorgenannten Verfahren eingerichtet ist. Bei einer kontinuierlich arbeitenden Gleisstopfmaschine sind der Maschinenrahmen und die Arbeitsaggregate in einem sogenannten Satelliten angeordnet, welcher gegenüber einem Fahrzeugrahmen zyklisch vor und zurück bewegt wird.

Dabei ist es von Vorteil, wenn das Sensor- und Steuerungssystem eine Sensoreinrichtung mit mehreren unterschiedlich aufgebauten Sensoren umfasst. Damit lassen sich unterschiedliche Strukturen und Elemente des Gleises erfassen, wobei eine Fusion der Sensordaten ein detailliertes Gesamtbild des Gleises ergibt. Dieses Gesamtbild dient als Basis für eine besonders genaue Ermittlung der Arbeitsstellungen der Arbeitsaggregate.

Eine vorteilhafte Ausgestaltung des Sensor- und Steuerungssystems umfasst einen sogenannten Leitcomputer zur Korrektur einer Gleislage, eine Maschinensteuerung zur Ansteuerung der Arbeitsaggregate und eine Recheneinheit zur Ermittlung der Arbeitsstellungen der Arbeitsaggregate, wobei der Leitcomputer, die Maschinensteuerung und die Recheneinheit über ein Bus-System verbunden sind. Damit ist eine Nachrüstung bestehender Gleisbaumaschinen möglich.

Eine weitere Vereinfachung der Gleisbaumaschine ist gegeben, wenn die Anzeigevorrichtung und die Bedienelemente in einer Fahrerkabine angeordnet sind und wenn für eine Justierung der Arbeitsaggregate mittels der Bedienelemente eine Kamera zur Übertragung von Echtzeitaufnahmen der Arbeitsaggregate in die Fahrerkabine angeordnet ist. Da im Regelfall der automatisierte Arbeitsablauf keine Nachjustierung erfordert, können bisher notwendige Arbeitskabinen mit Sicht auf die Arbeitsaggregate entfallen. Damit wird gegenüber herkömmlichen Gleisbaumaschinen eine erhebliche Reduktion des Gewichts und der Abmessungen erreicht.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1 Gleisbaumaschine
- Fig. 2 Weiche
- Fig. 3 Lageplan einer zu stopfenden Weiche
- Fig. 4 Sensor- und Steuerungssystem
- Fig. 5 Verfahrensablauf mit Bestätigungsabfrage
- Fig. 6 alternativer Verfahrensablauf
- Fig. 7 Darstellung der Hebeaggregate in der Anzeigevorrichtung
- Fig. 8 Kombinierte Darstellung in der Anzeigevorrichtung
- Fig. 9 Darstellung der Stopfaggregate in der Anzeigevorrichtung

### Beschreibung der Ausführungsformen

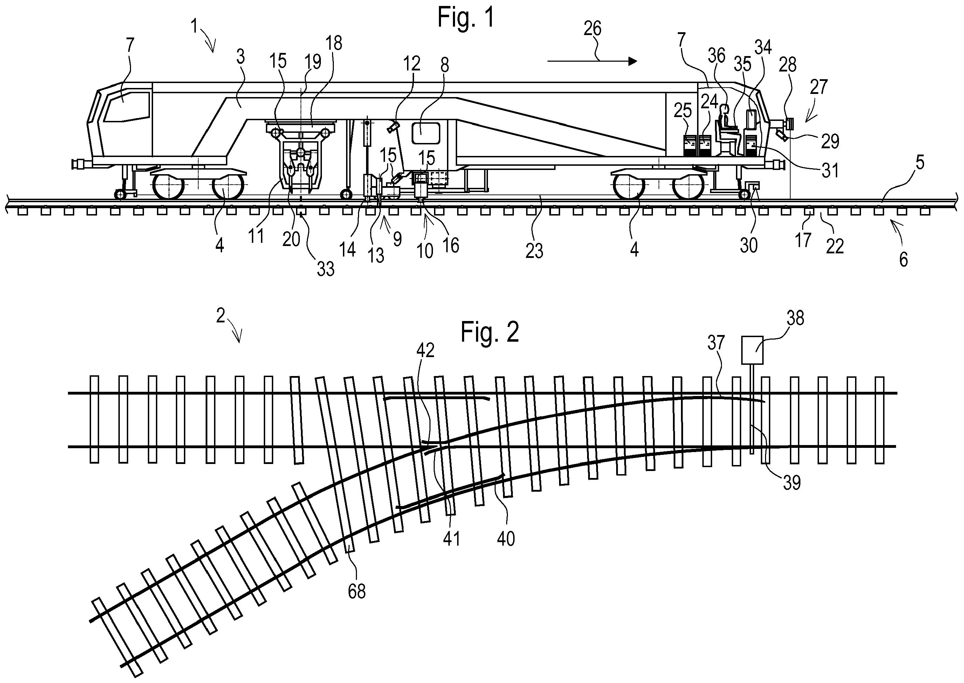

Die in Fig. 1 dargestellte Gleisbaumaschine 1 zur Durchführung des erfindungsgemäßen Verfahrens ist eine Weichenstopfmaschine zum Stopfen einer Weiche 2. Die Maschine 1 umfasst einen Maschinenrahmen 3, der auf Fahrwerken 4 abgestützt auf Schienen 5 eines Gleises 6 verfahrbar ist. Alternativ zum dargestellten Beispiel stützt sich bei einer kontinuierlich arbeitenden Gleisstopfmaschine ein Fahrzeugrahmen auf den Fahrwerken 4 ab und ein Satellit umfasst den Maschinenrahmen 3. An den beiden Stirnseiten ist jeweils eine Fahrerkabine 7 angeordnet. In einer einfachen Variante der vorliegenden Erfindung ist zusätzlich eine Arbeitskabine 8 mit direktem Blick auf gegenüber dem Maschinenrahmen 3 verstellbare Arbeitsaggregate 9, 10, 11 vorgesehen. Diese Arbeitskabine 8 kann entfallen, wenn Kameras 12 angeordnet sind, die Echtzeitaufnahmen der Arbeitsaggregate 9, 10, 11 in die Fahrerkabine 7 übertragen.

Als Arbeitsaggregate 9, 10, 11 umfasst die bespielhafte Weichenstopfmaschine ein Hebeaggregat 9, das gewöhnlich als kombiniertes Hebe- und Richtaggregat ausgeführt ist. Ein solches Arbeitsaggregat 9 verfügt über einen Hebehaken 13, mindestens eine Richtrolle und eine Rollenhebezange 14 für jede Schienen 5 des Gleises 6. Der jeweilige Hebehaken 13 ist höhenverstellbar und greift wahlweise unter dem Schienenkopf oder dem Schienenfuß an. Mittels mehrerer Antriebe 15 ist das Hebeaggregat 9 gegenüber dem Maschinenrahmen 3 verstellbar. Mit Hebezylinder wird das Gleis 6 auf ein gewünschtes Niveau angehoben. Hinzu kommt eine Querversteilbarkeit zum Richten des Gleises und eine Längsverstellbarkeit um Justieren der Greiforgane 13, 14 in Längsrichtung.

Für ein gleichmäßiges Anheben der Weiche 2 ist ein Zusatzhebeaggregat 10 zum Greifen einer abzweigenden Schiene 5 angeordnet. Dieses Arbeitsaggregat 10 umfasst einen teleskopartig ausfahrbaren Träger. Der ausgefahrene Träger ist mittels eines Antriebs 15 um eine Fahrzeuglängsachse nach oben verschwenkbar. Am freien Ende des Trägers ist eine justierbare Schienengreifvorrichtung 16 (Kopf) angeordnet.

Zum Unterstopfen einer Schwelle 17 sind am Maschinenrahmen 3 verstellbare Stopfaggregate 11 angeordnet. Konkret sind die Stopfaggregate 11 an einer Aufhängevorrichtung 18 (Drehtisch) befestigt. Zur Anpassung an schräg positionierte Schwellen 17 ist die Aufhängevorrichtung 18 um eine Vertikalachse 19 drehbar am Maschinenrahmen 3 gelagert. Zudem sind die Stopfaggregate 11 über Antreibe 15 gemeinsam und separat lateral verschiebbar. Jedes Stopfaggregat 11 umfasst gewöhnlich zwei Paare gegenüberliegender Stopfpickel 20, die beim Arbeitsvorgang 21 mit Vibration beaufschlagt in Schwellenfächer 22 abgesenkt und mittels Beistellzylinder zueinander beigestellt werden. Zum Unterstopfen von Doppelschwellen werden bei den Beistellzylindern sogenannte Stoßklappen mittels Antriebe 15 weggeklappt, um die Öffnungsweite der gegenüberliegenden Stopfpickel zu vergrößern. Zur weiteren Anpassung an die Geometrie der Weiche 2 sind die einzelnen Stopfpickel 20 separat um eine Maschinenlängsachse verschwenkbar.

Während einer Weichendurcharbeitung erfolgt laufend eine Messung der Gleisgeometrie mittels eines Sehnenmesssystems 23. Dabei gibt ein sogenannter Leitcomputer 24 zuvor ermittelte Sollwerte vor. Der Leitcomputer 24 ist mit einer Maschinensteuerung 25 gekoppelt. Diese Maschinensteuerung 25 steuert die Hebe-und Richtantriebe der Hebeaggregate 9, 10 an, um die Gleisgeometrie den Sollwerten anzugleichen.

In einer Arbeitsrichtung 26 gesehen ist an der vorderen Stirnseite der Gleisbaumaschine 1 eine Sensoreinrichtung 27 angeordnet. Diese Sensoreinrichtung 27 umfasst beispielsweise einen Laser-Rotationsscanner 28, eine Farbkamera 29 und mehrere Laser-Linienscanner 30. Der Laser- Rotationsscanner 28 liefert während einer Vorwärtsfahrt eine dreidimensionale Punktwolke des Gleises 6 samt Umgebung. Die Laser- Linienscanner 30 sind auf die Schienenhälse gerichtet, um abgeschattete Bereiche abzudecken. Mit der Farbkamera 29 werden laufend fotografische Darstellungen des Gleises 6 erfasst.

Die mittels der Sensoreinrichtung 27 erfassten Daten werden in einer Recheneinheit 31 verarbeitet und in einer geeigneten Speichereinheit 32 abgespeichert (z.B. Computer mit Festplatte). Zunächst wird aus der Punktwolke und den Farbdarstellungen ein dreidimensionales Modell des Gleises 2 samt Umgebung errechnet. Mittels einer in der österreichischen Patentanmeldung AT 518692 A1 offenbarten Objekterkennung werden in dem Modell Schwellen 17, Schwellenfächer 22, Schienen 5 und Hindernisse 37 - 42 identifiziert. In weiterer Folge wird für jede Gleisstelle 33, an der ein Arbeitsvorgang 21 durchzuführen ist, die Einsetzbarkeit der Arbeitsaggregate 9, 10, 11 geprüft. Beispielsweise werden für die Stopfaggregate 11 zugängliche Schwellenfächer 22 ermittelt. Für die Hebeaggregate 9, 10 erfolgt eine Bestimmung der bestmöglichen Greifpositionen. Auf diese Weise werden für jeden Arbeitsvorgang 21 vorgegebene Arbeitsstellungen der Arbeitsaggregate 9, 10, 11 ermittelt.

In der Fahrerkabine 7 oder in der Arbeitskabine 8 ist eine Anzeigevorrichtung 34 (Monitor, Touchscreen etc.) angeordnet, auf der die ermittelten Arbeitsstellungen angezeigt werden, bevor eine tatsächliche Ansteuerung der Arbeitsaggregate 9, 10, 11 erfolgt. Zudem sind in der entsprechenden Kabine 7, 8 Bedienelemente 35 angeordnet. Mittels derer kann eine Bedienperson 36 vor einer Durchführung des Arbeitsvorgangs 21 die Arbeitsstellungen der Arbeitsaggregate 9, 10, 11 verändern.

Fig. 2 zeigt eine Weiche 2 in einer Aufsicht. Hier gelten die üblichen Weichenkomponenten als Hindernisse für die Arbeitsaggregate 9, 10, 11. Das sind z.B. Zungen 37, Stellmotor 38, Weichengestänge 39, Radlenker 40, Flügelschienen 41 und Herzstück 42. Die Lage und Ausdehnung dieser Hindernisse 37-42 werden mittels der Sensoreinrichtung 27 detektiert.

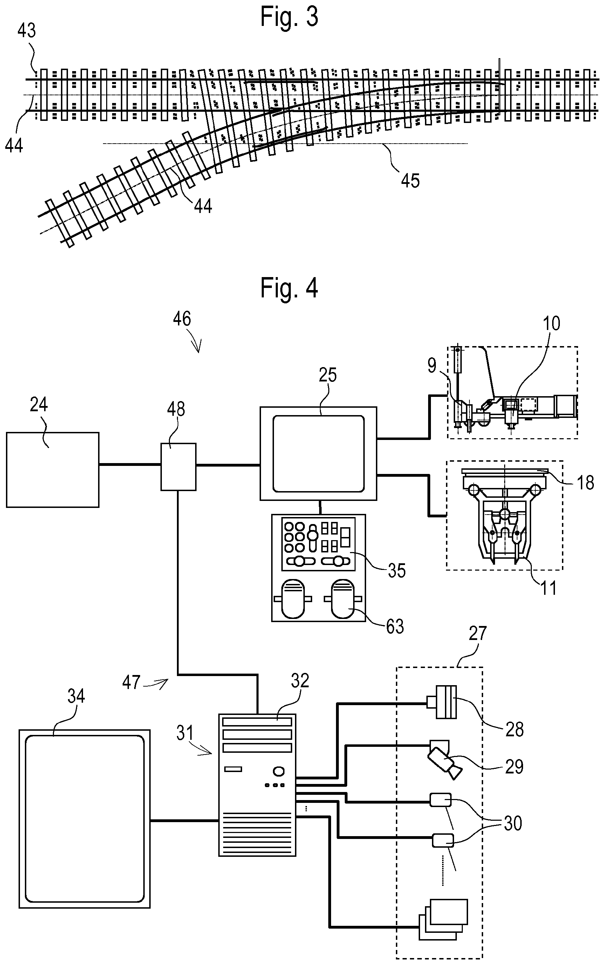

Für jede Weiche bzw. jeden Weichentyp liegen gewöhnlich Stopfpläne vor, wie in Fig. 3 dargestellt. Darin sind für die notwendigen Arbeitsgänge geplante Stopfpositionen 43 für die einzelnen Stopfaggregate 11 bzw. Stopfpickel 20 eingezeichnet. Im Beispiel sind das die geplanten Stopfpositionen 43 für einen ersten Arbeitsgang, bei dem die Weichenstopfmaschine den durchgehenden Strang der Weiche 2 entlangfährt. In einem zweiten Arbeitsgang wird der abzweigende Strang befahren, wobei die im ersten Arbeitsgang nicht unterstopften Bereiche bearbeitet werden. Die jeweilige Gleismitte dient als Maschinenleitlinie 44 und für das jeweils äußere Stopfaggregat 11 ist eine maximale Ausstellweite 45 angegeben.

Ein in der Gleisbaumaschine 1 angeordnetes Sensor- und Steuerungssystem 46 umfasst den Leitcomputer 24, die Maschinensteuerung 25, ein Bus-System 47, die Recheneinheit 31 sowie die Sensoreinrichtung 27 (Fig. 4). Die einzelnen Sensoren 28, 29, 30 sind an die Recheneinheit 31 angeschlossen. Je nach Anwendungsfall können der Sensoreinrichtung 27 weitere Sensoren (z.B. Induktionssensor) hinzugefügt werden.

In der Recheneinheit 31 werden die Sensordaten zu einem Modell des Gleises 2 zusammengeführt und ausgewertet. Ergebnis dieser Auswertung sind die einzelnen Arbeitsstellungen der Arbeitsaggregate 9, 10, 11 für die zu bearbeitenden Gleisstellen 33. Zur Berechnung der Arbeitsstellungen an der jeweils zu bearbeitenden Gleisstelle 33 sind in der Recheneinheit 31 Geometriedaten der Gleisbaumaschine 1, insbesondere der Arbeitsaggregate 9, 10, 11 abgespeichert.

Mittels der Geometriedaten der Gleisbaumaschine 1 ermittelt die Recheneinheit 31 aus den Lage- und Geometriedaten des Gleises 6 sowie der Gleisobjekte 5, 17, 22, 37-42 bzw. aus dem abgeleiteten digitalen Gleismodell die optimalen Arbeitsstellungen der Arbeitsaggregate 9, 10, 11 bzw. der Aggregatkomponenten an der zu bearbeitenden Gleisstelle 33. Parallel dazu wird laufend die aktuelle Lage der Gleisbaumaschine 1 bzw. der Arbeitsaggregate 9, 10, 11 gegenüber dem Gleis 6 mittels der Sensoreinrichtung 27 oder mittels weiterer Sensoren (z.B. Wegaufnehmer) erfasst. Über einen laufenden Abgleich dieser Daten in der Maschinensteuerung 25 erfolgt beim Erreichen der Gleisstelle 33 eine Zuordnung der entsprechenden Arbeitsstellungen der Arbeitsaggregate 9, 10, 11.

Optional können in der Recheneinheit 31 der Stopfpläne mit den geplanten Stopfpositionen 43 oder daraus abgeleitete neuralgische Punkte einer Weiche 2 abgespeichert sein. Solche Plandaten geben beispielsweise an, wo ein Wechsel von Orientierungslinien (Schienen 5) für ein einzelnes Stopfaggregat 11 zu erfolgen hat. Zum Beispiel ist für eine Hauptstrangstopfung vorgegeben, dass mit dem äußersten Aggregat 11 am abzweigenden Strang entlang gestopft werden soll, bis die maximale Ausstellweite 45 erreicht ist. Dann erfolgt eine laterale Verschiebung auf die Innenschiene des abzweigenden Strangs und diese wird weiter verfolgt, bis wiederum die maximale Ausstellweite 45 erreicht ist. An dieser Stelle ist eine Zurückführung des Aggregats 11 an den Hauptstrang vorgesehen. Mit der an die Recheneinheit 31 angeschlossenen Anzeigevorrichtung 34 werden der Bedienperson 36 die ermittelten Arbeitsstellungen angezeigt.

Das Bus-System 47 ist beispielsweise als Ethernet ausgebildet. Über einen Ethernet Switch 48 werden der Maschinensteuerung 25 die Daten der Recheneinheit 31 und des Leitcomputers 24 zugeführt. Durch diesen Netzaufbau besteht die Möglichkeit, bestehende Gleisbaumaschinen 1 mit dem vorliegenden Assistenzsystem zur automatisierten Ansteuerung der Arbeitsaggregate 9, 10, 11 zu erweitern.

Als Bedienelemente 35 zur Justierung der Arbeitsstellungen können Bedienelemente der Maschinensteuerung 25 genutzt werden. Alternativ dazu sind an die Recheneinheit 31 angeschlossene Bedienelemente, kabellose Bedienelemente oder Touchscreens nutzbar. Die meist als Speicherprogrammierbare Steuerung (SPS) ausgebildete Maschinensteuerung 25 steuert die einzelnen Antriebe 15 der Arbeitsaggregate 9, 10, 11 an. Günstigerweise sind die Arbeitsaggregate 9, 10, 11 mit Sensoren zur Erfassung der momentanen Aggregatstellungen ausgestattet. Eine solche Rückkopplung optimiert die Ansteuerungsvorgänge. Optional werden in einem Stopfprotokoll Abweichungen der mittels der Sensoren errechneten Ist-Arbeitsstellungen von den ermittelten Soll-Arbeitsstellungen erfasst.

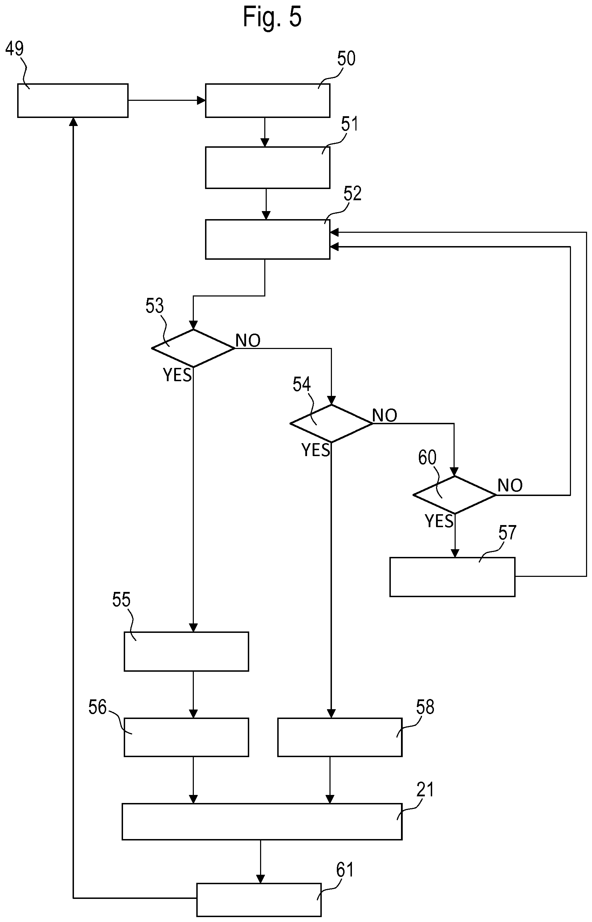

Ein vorteilhafter Verfahrensablauf ist in Fig. 5 dargestellt. Dieser wird beispielsweise in einem ersten Betriebsmodus der Gleisbaumaschine 1 ausgeführt. Ausgehend von einer Objekt- und Lagebestimmung 49 erfolgt mittels bekannter numerischer Methoden eine Modellbildung 50 des Gleises 2. Im nächsten Verfahrensschritt erfolgt die Arbeitsstellungsermittlung 51 für die Arbeitsaggregate 9, 10, 11, jeweils bezogen auf eine zu bearbeitende Gleisstelle 33. Die Arbeitsstellungen werden in einem Anzeigevorgang 52 auf der Anzeigevorrichtung 34 angezeigt, verknüpft mit einer Bestätigungsabfrage. Diese Bestätigungsabfrage gliedert sich dabei in eine Zustimmungsabfrage 53 sowie einer Ablehnungsabfrage 54.

Bei einer Bestätigung YES der Zustimmungsabfrage 53 erfolgt eine Datenübertragung 55 zur Maschinensteuerung 25, um die ermittelten Arbeitsstellungen in Steuersignale für die Arbeitsaggregate 9, 10, 11 umzusetzen. Damit wird beim Erreichen der entsprechenden Gleisstelle 33 eine automatisierte Positionierung 56 der Arbeitsaggregate 9, 10, 11 vorgenommen und im nächsten Schritt der Arbeitsvorgang 21 (Hebe- bzw. Richtvorgang und Stopfvorgang) durchgeführt.

Bei einer Bestätigung YES der Ablehnungsabfrage 54 werden die Arbeitsaggregate 9, 10, 11 angehalten, sobald diese an der entsprechenden Gleisstelle 33 angelangt sind. Es erfolgt ein manuelles Positionieren 58 der Arbeitsaggregate 9, 10, 11 mittels der Bedienelemente 35. Im Falle einer kontinuierlich arbeitenden Gleisstopfmaschine wird zunächst nur der Satellit angehalten. Ein Anhalten des gesamten Fahrzeugs erfolgt erst, wenn dieses auf den Satelliten aufläuft (meist ist die manuelle Positionierung 58 davor abgeschlossen). Stopfaggregate 11 werden über der aktuell zu unterstopfenden Schwelle 17 positioniert. Die Positionierung 58 der Rollenhebezangen 14 erfolgt vor einer Weiterfahrt zur nächsten Schwelle 17. Nach Durchführung des Arbeitsvorgangs 21 und der Weiterfahrt 61 folgt ein nächster Arbeitszyklus.

Bei mehreren Arbeitsaggregaten 9, 10, 11 ist auch eine uneinheitliche Bestätigung möglich. Dabei wird nur einem Teil der ermittelten Arbeitsstellungen zugestimmt, mit einer anschließenden automatisierten Positionierung 56. Beim anderen Teil mit abgelehnten Arbeitsstellungen wird das betreffende Arbeitsaggregat 9, 10, 11 an der für den Arbeitsvorgang 21 vorgesehenen Gleisstelle 33 angehalten und manuell positioniert.

Als Bestätigungsfrist für die Abfragen 53, 54 wird ein mit der Gleisbaumaschine 1 mitbewegter Anzeigehorizont 59 angezeigt. Bei einer Anzeigehorizonterreichung 60 ohne Abfragebestätigung wird ein Anhalten 57 der Maschine 1 ausgelöst. Die Gleisbaumaschine 1 hält solange an, bis entweder eine Zustimmung oder eine Ablehnung der angezeigten Arbeitsstellungen erfolgt. Mit dieser Sicherheitsmaßnahme wird eine Weiterfahrt blockiert, wenn die Bedienperson 36 keine Bestätigung vornimmt.

Zur weiteren Absicherung kann in einem zweiten Betriebsmodus unmittelbar vor dem Arbeitsvorgang 21 eine Freigabeabfrage 62 erfolgen. Als Freigabeaktion betätigt die Bedienperson eine Freigabebedienelement 63 (z.B. ein Pedal). Dieser Vorgang kann ohne Unterbrechung des Ablaufs geschehen, sodass es durch diese Sicherheitsmaßnahme in der Regel zu keinen Verzögerungen kommt.

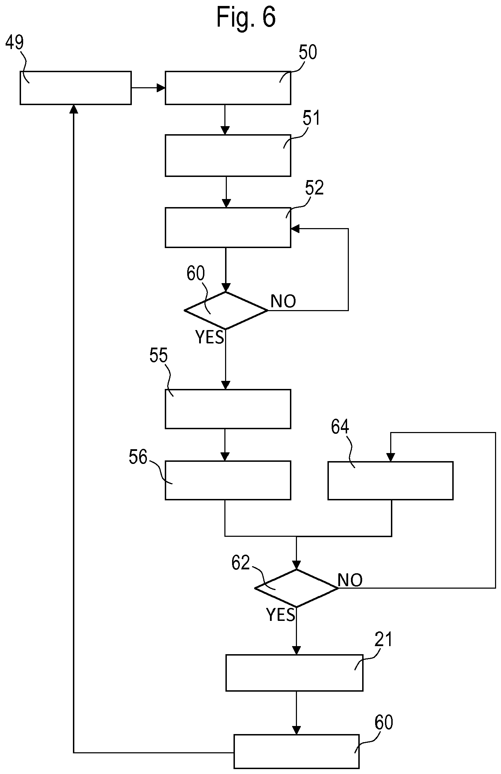

Ein alternativer Verfahrensablauf ist in Fig. 6 dargestellt. Hier werden in einem dritten Betriebsmodus die ermittelten Arbeitsstellungen ohne Bestätigungsabfrage bis zur Anzeigenhorizonterreichung 60 angezeigt. Dann erfolgt die Datenübertragung 55 zur Maschinensteuerung 25 und die automatische Positionierung 56 der Arbeitsaggregate 9, 10, 11. Für eine Durchführung des Arbeitsvorgangs 21 muss eine Freigabeabfrage 62 bestätigt werden (YES). Dazu betätigt die Bedienperson 36 ein Freigabebedienelement 63. Davor besteht jedoch die Möglichkeit, eine Nachjustierung 64 der Arbeitsstellungen mittels Bedienelemente 35 vorzunehmen.

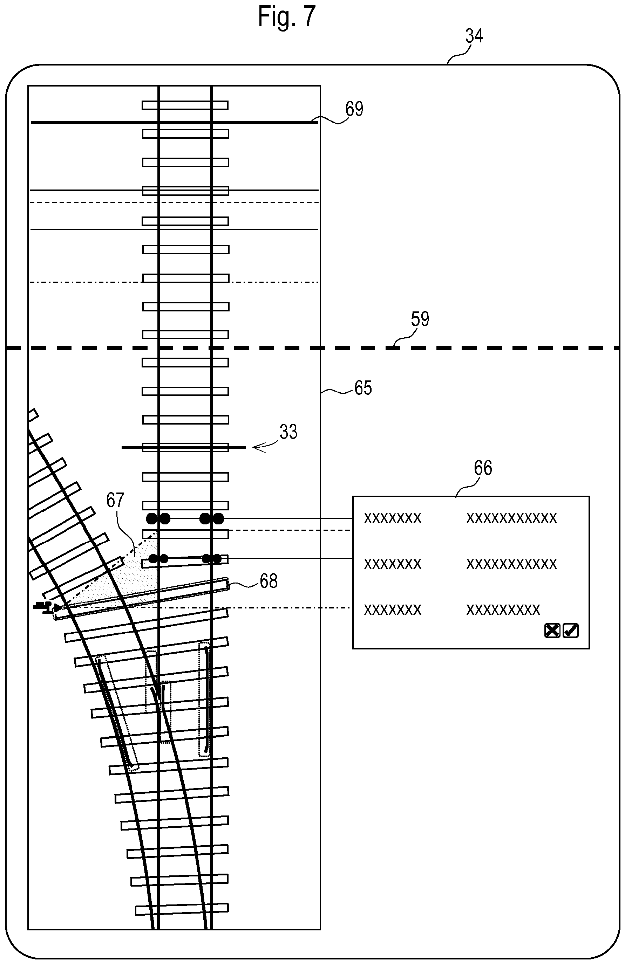

Die Figuren 7-9 zeigen beispielhafte Darstellungen, die der Bedienperson 36 mittels Anzeigevorrichtung 34 angezeigt werden. Untergliedert ist die Darstellung in ein erstes Anzeigefenster 65 mit einem Bild der Weiche 2 und in ein zweites Anzeigefenster 66 mit Daten zu ermittelten Arbeitsstellungen. Der Anzeigehorizont 59 ist als gestrichelte Linie dargestellt. Der Anzeigehorizont 59 und das erste Anzeigefenster 65 bewegen sich mit der Gleisbaumaschine 1 mit, sodass sich bei einer Weiterfahrt 61 das Bild der Weiche 2 innerhalb des ersten Anzeigefensters 65 entgegen der Arbeitsrichtung 26 bewegt.

In Fig. 7 sind die Arbeitsstellungen des Hebeaggregats 9 und des Zusatzhebeaggregats 10 an einer zu bearbeitenden Gleisstelle 33 eingeblendet. Beim Stopfen ist das die Gleisstelle 33, an der die Stopfaggregate 11 positioniert werden. In Arbeitsrichtung 26 liegen davor die Hebevorrichtungen 9, 10. Im gezeigten Beispiel wurde für die Gleisstelle 33 der Einsatz von vier Rollenhebezangen 14 des Hebeaggregats 10 sowie der Schienengreifvorrichtung 16 des Zusatzhebeaggregats 10 ermittelt. Die jeweilige Arbeitsstellung ist dabei als Kreisscheibe (im Einsatz befindliche Greifrolle) oder als Piktogramm (Greifvorrichtung) dargestellt. Mit einer schraffierten Dreiecksfläche wird ein Ausfahrvorgang 67 angezeigt. Die entsprechende Fläche am Gleis 6 muss frei von aufragenden Hindernissen (z.B. Signallaterne) sein.

Auch ein Anstellwinkel der Schienengreifvorrichtung 16 (verstellbarer Kopf am freien Ende des Zusatzhebeaggregats 10) wird sinnvollerweise angezeigt. Mit diesem Anstellwinkel wird eine Führungsrolle parallel zur abzweigenden Schiene 5 ausgerichtet.

Zusätzlich ist die erste Langschwelle 68 der Weiche 2 hervorgehoben. Auch alle erkannten Hindernisse 37-42 sind entweder farblich oder durch Umrahmung gekennzeichnet. Ergänzend ist eine Überlagerung der Konturen der einzelnen Gleisobjekte 5, 17, 22, 37-42 mit einer fotografischen Darstellung des Gleises 6 sinnvoll, um der Bedienperson 26 ein umfassendes Gesamtbild der Situation zu liefern. Auf diese Weise sind gegebenenfalls nicht erkannte Hindernisse oder unzureichende Arbeitsstellungen sofort erkennbar.

Im zweiten Anzeigefenster 66 werden weitere Informationen zu den ermittelten Arbeitsstellungen einer Hebeaktion angezeigt. Sinnvolle Angaben sind beispielsweise die Anzahl der im Eingriff befindlichen Greiforgane 13, 14, 16 und eine daraus abgeleitete Qualitätsangabe, ob eine sichere Gleishebung zu erwarten ist. Zudem kann für jedes Greiforgan 13, 14, 16 ein zurückgelegter Gleisweg (Kilometrierung) angegeben werden. Dazu ist jedem Greiforgan 13, 14 16 eine eigene Linie zugeordnet. Mit dieser farblichen oder sonstigen Zuordnung sind im ersten Anzeigefenster 65 auch die aktuellen Positionen der Arbeitsaggregate 9, 10, 11 eingeblendet. Diese befinden sich in Arbeitsrichtung 26 hinter dem Anzeigehorizont 59. Beispielsweise kennzeichnet eine durchgezogene Linie 69 die aktuelle Position des Stopfaggregats 11.

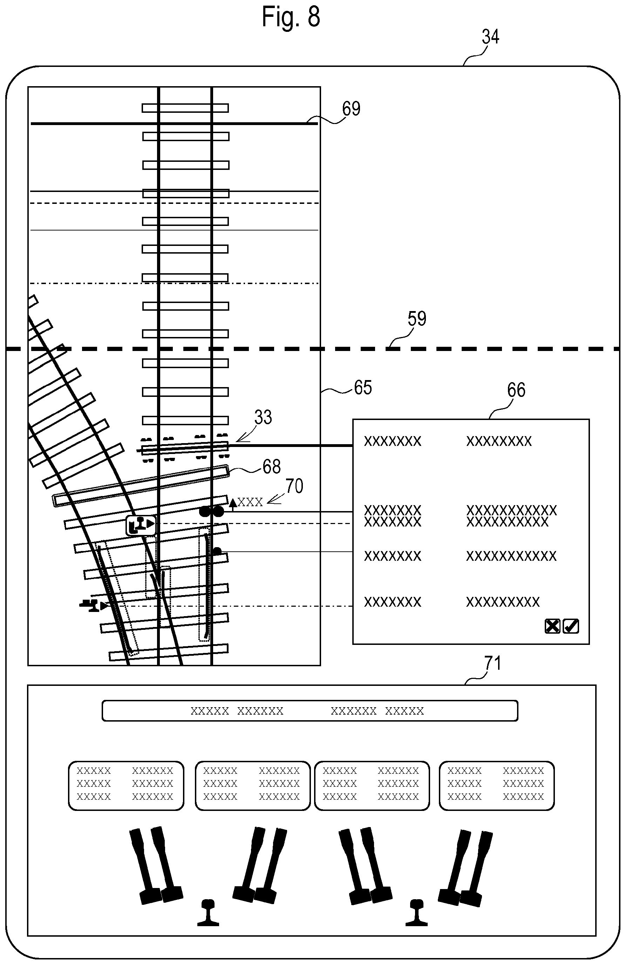

Fig. 8 zeigt eine kombinierte Darstellung der Arbeitsstellungen aller Arbeitsaggregate 9, 10, 11. Für das Hebeaggregat 9 ist eine Längsverschiebung 70 angegeben, damit der Hebehaken 13 die betreffende Schiene 5 in einem Schwellenfach 22 am Schienenfuß greifen kann. Die Greifposition ist mittels eines Piktogramms angezeigt. An dieser Gleisstelle 33 können nur drei Rollen des Hebeaggregats 9 in eine Greifstellung gebracht werden.

Da im Bereich der zu unterstopfenden Schwelle 17 keine Hindernisse 37-42 liegen, können alle Stopfpickel 20 zum Einsatz kommen. Dabei sind die Arbeitsstellungen der einzelnen Stopfpickel 20 durch schematische Querschnitte der Pickel 20 dargestellt. Die Lage der Aufhängevorrichtung 18 ist mit einem durchgehenden Strich gekennzeichnet, wobei durch eine Drehung um die Vertikalachse 19 eine Anpassung an die Schräglage der Schwelle 17 erfolgt.

In einem dritten Anzeigefenster 71 sind Informationen zur Arbeitsstellung der Aufhängevorrichtung 18 sowie zu den lateralen Verschiebungen und Winkelstellungen der jeweiligen Stopfpickel 20 angegeben. Dabei ist jeder Stopfpickel 20 in Bezug auf einen jeweiligen Schienenquerschnitt schematisch in der ermittelten Arbeitsstellung dargestellt, um eine rasche Beurteilung der Situation zu ermöglichen. Auch die ermittelte Öffnungsweite der gegenüberliegenden Stopfpickel 20 und damit die Arbeitsstellung der Stoßklappen kann hier oder in einem anderen Arbeitsfenster 65, 66 angezeigt werden. Mit einer kombinierten Bestätigungsabfrage im zweiten Anzeigefenster 66 kann eine Zustimmung oder Ablehnung der Arbeitsstellungen aller Arbeitsaggregate 9, 10, 11 erfolgen.

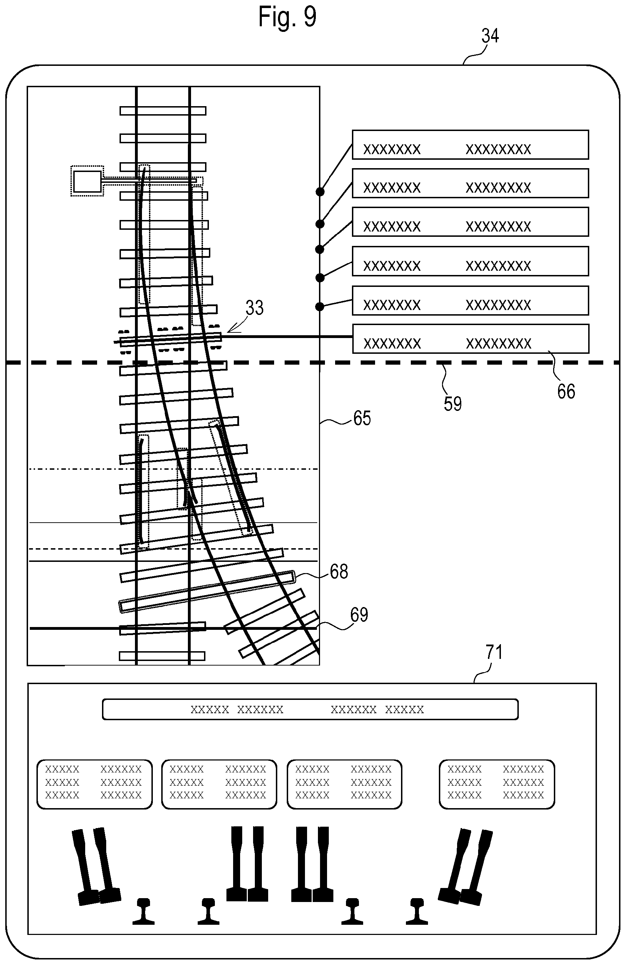

In Fig. 9 ist die Ansicht der Weiche 2 um 180° gedreht. Die Blickrichtung der Bedienperson entspricht somit der Arbeitsrichtung 26, wie bei Streckenstopfmaschinen üblich. Diese Darstellung eignet sich für die Überwachung der ermittelten Arbeitsstellungen der Stopfaggregate 11. Beim Streckenstopfen kann die Gleishebung vollkommen automatisiert ablaufen, weil nur Rollenhebezangen genutzt werden und weil Hindernisse sehr selten sind. Diese werden jedenfalls mit der Sensoreinrichtung 27 erfasst, sodass eine Kollision sicher vermieden wird.

Hier liegt ein Verfahrensablauf gemäß Fig. 6 zugrunde. Für jede Gleisposition 33 mit bereits ermittelten Arbeitsstellungen der Arbeitsaggregate 9, 10, 11 werden in einem jeweiligen zweiten Anzeigefester 66 Zusatzinformationen angezeigt. Im dritten Anzeigefester 71 sind die zuletzt ermittelten Lateral- und Winkelstellungen der Stopfpickel 20 angegeben. Sobald die jeweilige Gleisposition 33 den Anzeigehorizont 59 erreicht, verschwinden die entsprechenden Arbeitsstellungsdarstellungen samt Zusatzinformationen in den Anzeigefenstern 65, 66, 71. Eine Nachjustierung 64 erfolgt gegebenenfalls vor einer Freigabe des Arbeitsvorgangs 21.

Auch anderen Anzeigevarianten sind geeignet, um die Bedienperson 36 in die Lage zu versetzen, ermittelte Arbeitspositionen freizugeben. Dazu zählen rein textuelle oder rein graphische Angaben zu den Arbeitspositionen oder eine dreidimensionale Darstellung mittels geeigneter Monitore oder Datenbrillen.

## Patentansprüche

1. Verfahren zum Steuern einer Gleisbaumaschine (1), insbesondere einer Weichenstopf- bzw. Universalstopfmaschine, welche Gleisbaumaschine (1) auf einem Gleis (6) entlang fährt und gegenüber einem Maschinenrahmen (3) verstellbare Arbeitsaggregate (9, 10, 11), insbesondere ein Stopfaggregat (11) sowie ein Hebeaggregat (9) umfasst,
wobei in Arbeitsrichtung (26) vor den Arbeitsaggregaten (9, 10, 11) mittels einer Sensoreinrichtung (27) umfassend einen Laser-Rotationsscanner (28) und eine Farbkamera (29) Daten von Gleisobjekten (5, 17, 22, 37-42),insbesondere Schwellen (17), Schienen (5) und gegebenenfalls Hindernissen (37- 42) umfassend eine dreidimensionale Punktwolke beziehungsweise fotographische Darstellungen erfasst werden,
wobei aus den Daten der Gleisobjekte mittels einer Recheneinheit ein Gleismodell samt Umgebung ermittelt wird, wobei für einen Arbeitsvorgang (21) an einer Gleisstelle (33) aus dem Gleismodell die Arbeitsstellungen der Arbeitsaggregate (9, 10, 11) ermittelt werden, die aktuelle Lage der Arbeitsaggregate gegenüber dem Gleis (6) mittels der Sensoreinrichtung (27) oder mittels weiterer Sensoren erfasst wird,
wobei über einen Abgleich von Daten beschreibend die Soll-Arbeitsstellungen der Arbeitsaggregate und beschreibend die aktuelle Lage der Arbeitsaggregate in einer Maschinensteuerung (25) der Gleisbaumaschine (1) eine Zuordnung der entsprechenden Arbeitsstellungen der Arbeitsaggregate (9, 10, 11) bei Erreichen einer Gleisstelle (33) erfolgt.

2. Verfahren nach Anspruch 1 , **dadurch gekennzeichnet, dass** in der Recheneinheit (31) Stopfpläne mit den geplanten Stopfpositionen 43 abgespeichert sind.

3. Verfahren nach einem der Ansprüche 1 bis 2, **dadurch gekennzeichnet, dass** mit der an die Recheneinheit (31) angeschlossenen Anzeigeeinheit (34) dem Bedienpersonal (36 ) die ermittelten Soll- Arbeitsstellungen angezeigt werden.

4. Verfahren nach einem der Ansprüche 1 bis 3, **dadurch gekennzeichnet, dass** die Arbeitsstellungen über die Bedienelemente (35) der Maschinensteuerung justiert werden können.

5. Verfahren nach einem der Ansprüche 1 bis 4, **dadurch gekennzeichnet, dass** in einem Stopfprotokoll die Abweichungen der durch die Sensoren ermittelten Ist-Arbeitsstellungen von den ermittelten Soll-Arbeitsstellungen erfasst werden.

## Claims

1. A method of controlling a railroad construction machine (1), in particular a switch tamper or universal tamper, which railroad construction machine (1) travels on a track (6) and comprises working units (9, 10, 11), in particular a tamping unit (11) and a lifting unit (9), which are adjustable relative to a machine frame (3),
wherein data on track objects (5, 17, 22, 37-42), in particular sleepers (17), rails (5) and optionally barriers (37-42), comprising a three-dimensional point cloud or photographic representations, respectively, is recorded upstream of the working units (9, 10, 11) in working direction (26) using sensor means (27) comprising a laser rotation scanner (28) and a colour camera (29),
wherein
a track model including surroundings is calculated from the data on the track objects using a calculation unit,
wherein the working positions of the working units (9, 10, 11) are calculated from the track model for a working operation (21) at a track site (33),
the current position of the working units with respect to the track (6) being calculated using the sensor means (27) or using further sensors,
wherein mapping of corresponding working positions of the working units (9, 10, 11) when reaching a track site (33) is done through matching data describing the target working positions of the working units and describing the current positions of the working units in a machine control (25) of the railroad construction machine (1).

2. The method of claim 1, **characterised in that**
tamping plans including the planned tamping positions (43) are stored in the calculating unit (31).

3. The method of any one of claims 1 and 2, **characterised in that**
the calculated target working positions are displayed to the operating staff (36) using the display unit (34) connected to the calculating unit (34).

4. The method of any one of claims 1 to 3, **characterised in that** the working positions can be adjusted via the operating elements (35) of the machine control.

5. The method of any one of claims 1 to 4, **characterised in that** deviations of actual working positions calculated by the sensors from calculated target working positions are recorded in a tamping log.

## Revendications

1. Procédé de commande d'une machine de construction de voie ferrée (1), en particulier d'une machine de bourrage d'aiguilles ou d'une machine de bourrage universelle, laquelle machine de construction de voie ferrée (1) se déplace le long d'une voie (6) et comprend des unités de travail (9, 10, 11) réglables par rapport à un châssis de machine (3), en particulier une unité de bourrage (11) ainsi qu'une unité de levage (9),
des données d'objets de voie (5, 17, 22, 37-42), en particulier de traverses (17), de rails (5) et éventuellement d'obstacles (37-42), comprenant un nuage de points tridimensionnel ou des représentations photographiques, étant saisies dans le sens de travail (26) en amont des unités de travail (9, 10, 11) au moyen d'un dispositif de détection (27) comprenant un scanner laser rotatif (28) et une caméra couleur (29),
un modèle de voie avec son environnement étant déterminé à partir des données des objets de voie au moyen d'une unité de calcul,
les positions de travail des unités de travail (9, 10, 11) étant déterminées à partir du modèle de voie pour une opération (21) à un point (33) de la voie ferrée,
la position actuelle des unités de travail par rapport à la voie (6) étant détectée au moyen du dispositif de détection (27) ou au moyen d'autres détecteurs,
les positions de travail des unités de travail (9, 10, 11) étant classées sur la base d'une comparaison de données décrivant les positions de travail de consigne des unités de travail avec des données décrivant la position actuelle des unités de travail dans une commande de machine (25) de la machine de construction de voie ferrée (1) lorsqu'un point (33) de la voie ferrée est atteint.

2. Procédé selon la revendication 1, **caractérisé en ce que** des plans de bourrage avec les positions de bourrage (43) de consigne sont stockés dans l'unité de calcul (31).

3. Procédé selon l'une des revendications 1 à 2, **caractérisé en ce que**
les positions de travail de consigne déterminées sont affichées au personnel de service (36) par une unité d'affichage (34) raccordée à l'unité de calcul (31).

4. Procédé selon l'une des revendications 1 à 3, **caractérisé en ce que**
les positions de travail peuvent être ajustées à l'aide des éléments de commande (35) de la commande de la machine.

5. Procédé selon l'une des revendications 1 à 4, **caractérisé en ce que**
les écarts entre les positions de travail réelles déterminées par les détecteurs et les positions de travail de consigne déterminées sont enregistrés dans un protocole de bourrage.
